(19) Europäisches Patentamt
European Patent Office
Office européen des brevets

(11) **EP 4 779 607 A1**

(12) **EUROPEAN PATENT APPLICATION**

(43) Date of publication:
**22.07.2026 Bulletin 2026/30**

(21) Application number: **25152987.1**

(22) Date of filing: **21.01.2025**

(51) International Patent Classification (IPC):
**G08G 1/00** (2006.01)       **G08G 1/16** (2006.01)
**B60W 30/095** (2012.01)    **B60W 60/00** (2020.01)
**G08G 1/01** (2006.01)

(52) Cooperative Patent Classification (CPC):
**G08G 1/166; B60W 30/095; B60W 60/0027;
G08G 1/0112; G08G 1/0133;** B60R 21/0134;
B60W 50/14; G01S 2013/932

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **KNORR-BREMSE Systeme für
Nutzfahrzeuge GmbH
80809 München (DE)**

(72) Inventors:
• **FLAIG, Wolfgang**
  **70563 Stuttgart (DE)**
• **MAIER, Oliver**
  **70372 Stuttgart (DE)**
• **Zoltan, SZABO**
  **1135 Budapest (HU)**
• **VILCSEK, Viktor**
  **1173 Budapest (HU)**

(54) **METHOD FOR DETERMINING THE COLLISION PROBABILITY OF A VEHICLE WITH AN OBJECT AND DEVICE FOR CARRYING OUT THE METHOD**

(57)     The invention relates to a method for determining the collision probability (p) of a vehicle (ego) with an object (VRU), in particular with a moving object, in which it is checked whether an object (VRU) is located within a detection range (4) of a sensor system (3) of the vehicle (ego), and if this is determined at a detection time ($t_0$), then vehicle parameters characterizing a position and/or a movement of the vehicle (ego) are detected in relation to a vehicle coordinate system (X, Y) and object parameters characterizing an object class and/or a position and/or a movement of the object (VRU) including a lateral position (dy ($t_0$)) of the object (VRU) relative to the vehicle (EGO) are detected in relation to the vehicle coordinate system (X, Y), and a collision check is performed at least on the basis of the detected vehicle parameters and the detected object parameters to determine whether a collision of the vehicle (EGO) is to be expected, and if it is determined during the collision check that a collision is to be expected, then the collision probability (p) of the vehicle (ego) with the object (VRU) is determined on the basis of a location probability ($p_{Kollision,Rayleigh}(t_{ttc})$) of the object within a drive tube (7) of the vehicle, where the location probability ($P_{Kollision,Rayleigh}(t_{ttc})$) is determined on the basis of a Rayleighfunction ($P_{Rayleigh}$).

FIG.1

EP 4 779 607 A1

## Description

The invention relates to a method for determining one of the collision probability of a vehicle with a moving object according to claim 1 and a device for carrying out the method according to claim 12.

Current systems for estimating the risk of collision with vulnerable road users such as pedestrians and cyclists, known as VRUs (Vulnerable Road Users), often use a deterministic model that assumes a constant speed or position of the road user. Due to the probabilistic nature of the VRU's movement, this approach often results in poor performance and less flexibility in adjusting the system. To avoid this, a Gaussian distribution is often used to model the uncertainties of the estimated state of the VRU and the uncertainties due to possible changes in the direction of movement of the VRU. This means that a finite probability is assumed that the VRU changes its detected initial direction of movement and, for example, moves away from the trajectory of the vehicle in the opposite direction to the initial direction of movement. Examples of this are a pedestrian turning back on a step, stopping abruptly on a crosswalk or changing their direction of movement by 90 degrees by suddenly walking along the edge of the sidewalk. However, the Gaussian distribution can exhibit a large variance, particularly in the case of measurement uncertainties in the kinematic variables, which means that the Gaussian bell curve broadens and flattens out. However, this reduces the probability that the VRU will remain within the drive tube at the time of the predicted collision with the vehicle, which may be unrealistic.

The invention is based on the task of providing a method for determining the probability of a vehicle colliding with a moving object, which is closer to reality. A device for carrying out the method is also to be provided.

This task is solved by the features of claims 1 and 12.

Disclosure of the invention

The invention discloses a method for determining a collision probability of a vehicle with an object, in particular with a moving object, in which

a) checking whether an object is located within a detection range of a sensor system of the vehicle, and if this is detected at a detection time, then
b) at the detection time

b1) vehicle parameters characterizing a position and/or a movement of the vehicle are detected, and
b2) object parameters characterizing an object class and/or a position and/or a movement of the object with respect to the vehicle including a lateral position of the object relative to the vehicle at the detection time are detected,

c) a collision check is carried out at least on the basis of the detected vehicle parameters and object parameters to determine whether or not a collision of the vehicle with the object is to be expected, and
d) if it is determined during the collision check that a collision is to be expected, then

d1) an expected collision time of the collision and/or an expected time to collision is determined, which extends from the detection time to the expected collision time, and
d2) a lateral position of the object relative to the vehicle which will be present at the expected collision time or after the time to collision has elapsed is predicted,

e) on the basis of

e1) the detected lateral position of the object at the detection time, and
e2) the expected collision time of the collision and/or the expected time to collision, and
e3) the predicted lateral position of the object which will be present at the expected collision time or after the time to collision has elapsed a location probability is determined for, that the lateral position of the object predicted relative to the vehicle predicted at the expected collision time or after the time to collision has elapsed, is located within a drive tube of the vehicle, wherein

f) when determining the location probability

f1) a location probability density function is used, which is represented by or comprises a Rayleigh-function, and
f2) location probability density function is integrated the between the boundaries of a drive hose or a drive corridor of the vehicle,

g) the collision probability of the vehicle colliding with the object is determined on the basis of the location probability.

The width of the vehicle's drive hose, for example measured transversely to the direction of travel of the vehicle, can be parameterized and can, for example, correspond to the width of the vehicle or be greater than this width in order to increase the safety of the process.

When using a Rayleigh-function as a basis for the location probability density function, a deviation of the object from its initially detected direction of movement is essentially excluded, i.e. that the object continues to move with the object movement parameters and the movement direction detected at the detection time until the expected collision time. The hypothetical case of, for example, an abrupt 180-degree turn of the object during its movement is considered unproblematic and is therefore excluded. This makes the method more realistic and also provides a more accurate collision probability.

In a particularly preferred method, at least some of the object parameters are detected in respect to a vehicle coordinate system has a zero point that is particularly arranged on a longitudinal center axis of the vehicle, in particular in the center of a front surface of the vehicle.

According to a further development of the method, the Rayleigh function is modelled on the basis of at least the following specifications:

a) the predicted lateral position of the object relative to the vehicle at the expected collision time is used as the expected value $E$ of the Rayleigh-function, and

b) the point at which the object is located at the detection time relative to the vehicle is used as the zero point of the Rayleigh-function, and

c) a reversal of the direction of movement of the object is excluded, in particular a reversal of the direction of movement by 180 degrees.

In the method, the expected collision time can be determined on the basis of the detection time and the expected time to collision.

In addition, the method can intervene in a drive and/or braking device of the vehicle depending on the determined collision probability the vehicle with the object. This can be implemented, for example, by checking whether the collision probability exceeds a parameterizable threshold value, and if this is the case, a physical signal is generated which triggers the intervention in the drive and/or braking device of the vehicle in order to brake the vehicle.

In the method, the detecting of object parameters of the object can also comprise a detecting of an object class of the object, whereby at least the following object classes being used:

a) pedestrians,

b) cyclists,

c) motor vehicles.

Further, according to the method a vehicle trajectory of the vehicle can be determined on the basis of the recorded or detected vehicle parameters, and an expected object trajectory of the object, particularly in relation to the vehicle coordinate system on the basis of the detected object parameters can be determined.

Preferably, the collision check is only carried out if the object has been detected or classified as a pedestrian or cyclist. It is also preferred that the collision check is only carried out if it is determined that the object trajectory intersects with the vehicle trajectory. These two conditions can apply individually and independently of each other or be linked together in a logical AND-operation.

Further according to the method, at least some of the following variables can be detected or determined as vehicle parameters and as object parameters: The relative longitudinal position of the object in respect to the vehicle, the relative lateral position of the object in respect to the vehicle, the relative longitudinal velocity in the longitudinal direction between the vehicle and the object, the relative lateral velocity in the lateral direction between the vehicle and the object, the longitudinal velocity of the vehicle in the longitudinal direction, the lateral velocity of the vehicle in the lateral direction, the direction of movement of the object, particularly in respect to the vehicle. Longitudinal means, for example, parallel or coaxial in relation to a longitudinal center line of the vehicle. Lateral can mean perpendicular to the longitudinal center line of the vehicle.

The invention also relates to a device for carrying out the method described above, which comprises at least:

a) a sensor system which is designed to detect the vehicle parameters and the object parameters, and

b) an evaluation device which is designed to carry out the collision check and determine the probability of the vehicle colliding with the object.

Drawings

One preferred example of the invention is shown in the drawings and explained in more detail in the following description. The drawings show in

Fig. 1    schematic top view of a traffic situation in which a moving vehicle follows a vehicle trajectory and a moving object follows an object trajectory, with the vehicle trajectory intersecting with the object trajectory at a predicted location of collision at an expected collision time;

Fig. 2    a flowchart of a method for determining a collision probability of the vehicle with the moving object according to a preferred embodiment of the invention.

Description of the design example

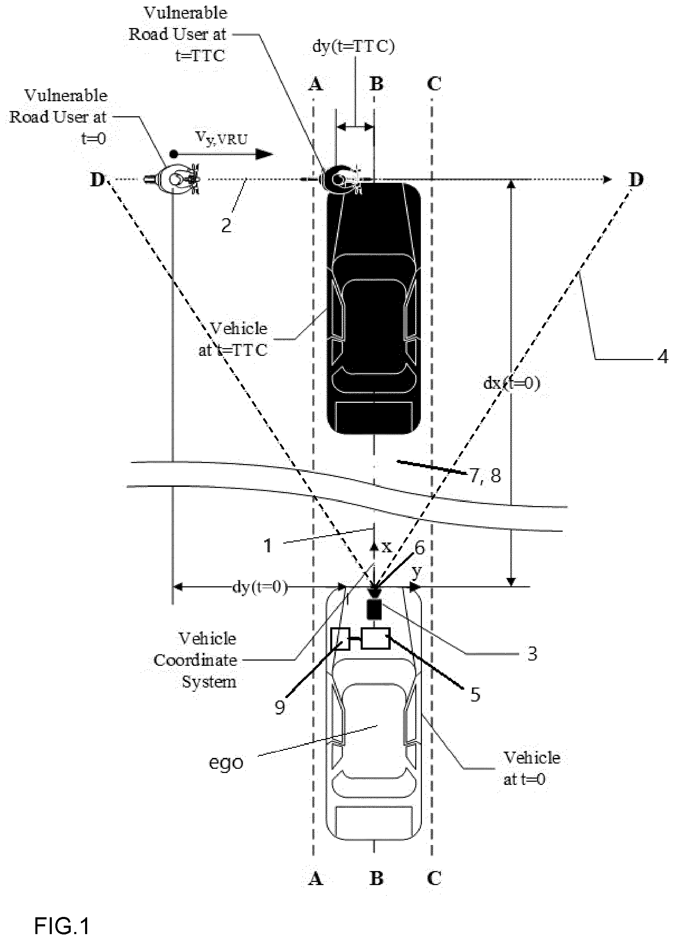

Fig. 1 shows a schematic top view of a traffic situation in which a vehicle ego follows a vehicle trajectory 1 on a roadway 8 and a moving object VRU (Vulnerable Road User) follows an object trajectory 2, which here extends between points D-D. In the example, the object is supposed to be a VRU (Vulnerable Road User), here in particular a cyclist. In the traffic situation, it is assumed that the vehicle trajectory 1 will intersect with the object trajectory 2 at a collision time $t_{ttc}$ and that a collision between the vehicle ego and the object VRU is therefore probable.

The vehicle ego has a first sensor system 3, e.g. at least one radar and/or at least one camera and possibly other and further sensors, which monitors the front area of the vehicle ego within a detection area 4 in a vehicle-fixed vehicle coordinate system X, Y, in particular continuously for objects and generates corresponding first sensor data, which is evaluated in an evaluation device 5, which is set up for this purpose with an implemented software. The evaluation device 5 is designed and set up to determine object parameters such as the relative position $x_{VRU}$, $y_{VRU}$, the relative speed $v_{VRUx}$, $v_{VRUy}$, the relative acceleration $a_{VRUx}$, $a_{VRUy}$ as well as the direction of movement of the object VRU in relation to the vehicle ego from the first sensor data, in particular in relation to the vehicle coordinate system X, Y, i.e. in the X direction and in the Y direction.

The vehicle coordinate system X, Y has a zero point 6, which is arranged, for example, on a longitudinal centerline B of the vehicle ego, in particular in the middle of a front surface of the vehicle ego. Here, the X direction runs parallel or along the longitudinal centerline B, for example, and the Y direction runs transverse to the longitudinal centerline B of the vehicle. A drive hose 7 of the vehicle ego, here for example the vehicle's surface projected onto the roadway 8, which is occupied or covered by the vehicle ego during its movement along the vehicle trajectory 1, is limited by the drive hose limitations A and C as shown in **Fig. 1.** Starting from the longitudinal centerline B of the vehicle ego, the lines A and C delimiting the driving hose 7 here, for example, each have a distance $\Delta y_{vehicle}/2$ from the longitudinal centerline B when $\Delta y_{vehicle}$ represents the vehicle width. Consequently, here for example, the width of the drive hose 7 correspond to the width $\Delta y_{vehicle}$ of the vehicle ego. However, embodiments are also possible in which the width of the drive hose 7 is greater than the vehicle's width $\Delta y_{vehicle}$.

Furthermore, the vehicle ego has a second sensor system 9, e.g. wheel speed sensors and optionally a vehicle-mounted GPS receiver, which is designed and set up to feed second sensor data into the evaluation device 5, which is then able to use the implemented software to determine vehicle parameters such as the position of the vehicle ego, the vehicle speed $v_{ego}$, the vehicle acceleration $a_{ego}$ and also the direction of movement of the vehicle ego from the second sensor data, here for example in relation to an external (stationary) coordinate system.

The evaluation device 5 is also designed to use the implemented software to establish correlations between the vehicle parameters and the object parameters such as, for example, the relative speed $v_{VRUx}$, $v_{VRUy}$, *the* relative acceleration $a_{VRUx}$, $a_{VRUy}$ as well as the direction of movement of the object VRU in relation to the vehicle ego, in particular in the X- and Y- directions in relation to the vehicle coordinate system X, Y, as already explained above.

Last but not least, the software of the evaluation device 5 is also able to classify the detected object VRU on the basis of the first sensor data of the first sensor system, for example into pedestrians, cyclists, motor vehicles (cars, trucks), whereby pedestrians and cyclists are classified here as VRU's.

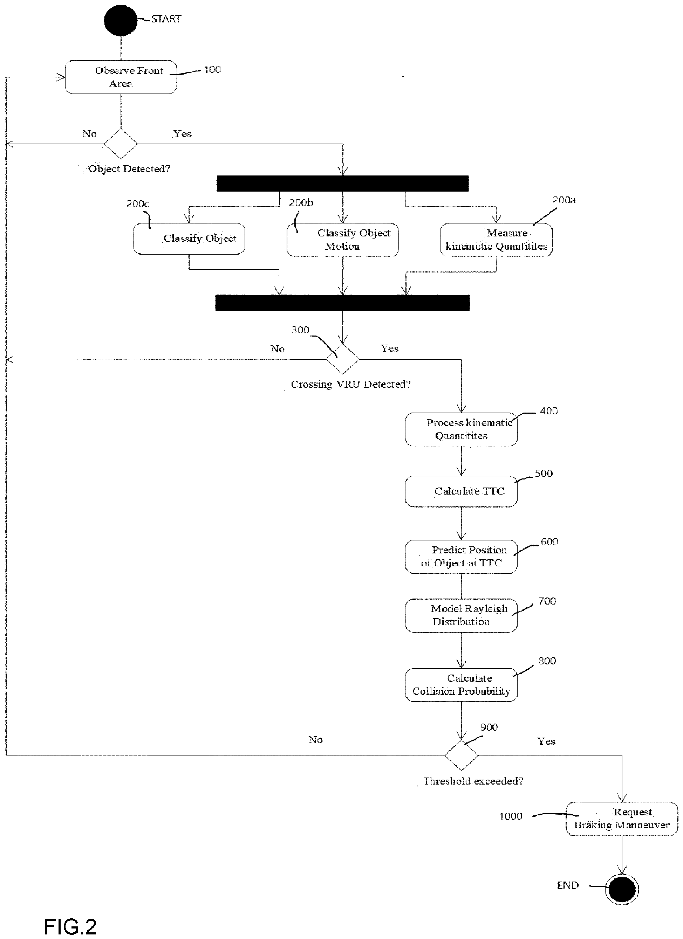

In the following, the steps of a preferred embodiment of a method for determining a collision probability of the vehicle ego with the object, here for example with a cyclist VRU according to **Fig. 2,** are described using the example of the traffic situation of **Fig. 1.** The method is implemented in software, which is also to be implemented here, for example, in the evaluation device 5. Alternatively, this software can also be implemented in any electronics of the vehicle ego.

Starting from a START-point of the method, it is positively determined in a **step 100** whether an object VRU is located within the detection range 4 of the first sensor system 3 or not. If this is not determined (No), the system loops back to START.

If, on the other hand, it is determined in **step 100** that an object VRU is located within the detection range (Yes), the detection time $t_0$ is registered, which here, for example, marks the start of the time count and is therefore equal to zero. For this purpose, the evaluation device 5 can be provided with a time counter. Furthermore, in a **step 200a,** the evaluation device 5 is then able to determine or calculate at least the following object parameters and vehicle parameters at the detection time $t_0$ using the sensor data from the two sensor systems 3, 9:

- the relative distance $\Delta x$, $\Delta y$ between the vehicle ego and the object *VRU*, in particular including the variances $\sigma$ (measurement uncertainties) of this variable $\sigma\Delta x$, $\sigma\Delta y$ or the relative position of the object *VRU* in relation to the vehicle ego;
- , the relative speed $\Delta v_x$, $\Delta v_y$, between the vehicle ego and the object *VRU*, in particular including the variances $\sigma$ (measurement uncertainties) of this variables $\sigma\Delta v_x$, $\sigma\Delta v_y$ or the relative speed of the object *VRU* in relation to the vehicle ego;
- the relative acceleration $\Delta a_x$, $\Delta a_y$ between the vehicle ego and the object VRU, in particular including the variances $\sigma$ (measurement uncertainties) of this variable $\sigma\Delta a_x$, $\sigma\Delta a_y$), or the relative acceleration of the object *VRU* in relation to the vehicle ego;
- the movement status of the object *VRU*, e.g. stationary, moving;
- for a moving object *VRU*, the direction of movement of the object VRU, particularly relative to the vehicle ego.

Preferably, the evaluation device 5 continues to determine the object parameters in a **step 200b** on the basis of the sensor data, in particular at the detection time $t_0$:

- the object class of the object *VRU*, e.g. pedestrian, cyclist, motor vehicle (car, truck);

- and optionally a probability of the existence of the object *VRU* within the detection range 4;

The evaluation device 5 can also continue to determine the object parameter on the basis of the first sensor data, in particular at the detection time $t_0$ in a **step 200c:**

- the direction of movement of the object *VRU* (e.g. towards the vehicle ego or away from the vehicle ego), in particular in relation to the vehicle coordinate system X, Y.

The first sensor system 3 therefore feeds the recorded first sensor data into the evaluation device 5, which is designed and set up in particular to recognize the object class of the recorded object *VRU* and to evaluate its movement data in relation to the vehicle ego (distances, speeds, accelerations, in particular as relative variables). Furthermore, the respective measurement uncertainties are preferably also calculated in the evaluation device 5.

In a subsequent **step 300** of the method, a logical AND operation is preferably used to query whether

- the object class of the object determined in **step 200c** is a *VRU*-class (Vulnerable Road User) such as the cyclist in this case, and whether

- the vehicle trajectory 1 and the object trajectory 2 intersect.

The assessment of whether the object trajectory 2 intersects or crosses the vehicle trajectory 1 or not is preferably made on the basis of the recorded or detected vehicle parameters and object parameters. For example, this assessment can be made depending on the ratio between the longitudinal speed (in the X direction in relation to the vehicle coordinate system X, Y) and the lateral speed (in the Y direction in relation to the vehicle coordinate system X, Y) of the object *VRU* relative to the vehicle ego. If this ratio falls below a predefined limit value, for example, then it is determined that the object trajectory 2 intersects with the vehicle trajectory 1, otherwise not.

If it is determined in **step 300** that at least one of the above two conditions does not apply (No), then the procedure is looped back to START. However, if both of the above conditions are fulfilled (logical "AND" operation), according to which a *VRU* has consequently been recognized as an object and a collision is probable due to the intersecting trajectories 1, 2 of the vehicle ego and the object *VRU*, a collision check is carried out in the subsequent steps of the procedure.

In the steps of the method following **step 300,** only objects whose object trajectory 2 intersects with the vehicle trajectory 1 and which have been recognized as a *VRU* (Vulnerable Road User) are therefore preferably taken into account for the collision check. All objects deviating from a *VRU* and objects whose object trajectory 2 has been found not to intersect with vehicle trajectory 1 are preferably ignored.

The subsequent steps of the procedure are carried out separately for each object that has passed the filtering in **step 300** (Yes).

In a subsequent **step 400,** further processing or further preparation of the first sensor data of the first sensor system 3 from the detected object *VRU* takes place. In addition, the trajectories 1, 2 of vehicle ego and object *VRU* are calculated and the object trajectory 2 is preferably transformed into the vehicle coordinate system X, Y. As a result, the object trajectory 2 is "straightened" in relation to the vehicle coordinate system X, Y along the vehicle trajectory 1, so that for further consideration the object *VRU* moves at a 90° angle relative to the vehicle trajectory 1 and therefore in the Y direction, as shown in **Fig. 1,** for example. The traffic situation shown in **Fig. 1** is sufficient for the further calculation, even if the object trajectory 2 and the vehicle trajectory 1 do not intersect at an exact 90° angle as shown in **Fig. 1.**

At least the following parameters are then preferably transformed into the vehicle coordinate system X, Y:

- the relative distance ($x_{VRU}$, $y_{VRU}$) between the vehicle and the object or the relative position of the object *VRU* in relation to the vehicle ego,

- the relative speed ($v_{x,VRU}$, $v_{y,VRU}$) between the vehicle and the object or the relative speed of the object *VRU* in relation to the vehicle ego,

- the relative acceleration ($a_{x,VRU}$, $a_{y,VRU}$) between the vehicle ego and the object *VRU* or the relative acceleration of the object *VRU* in relation to the vehicle ego,

preferably in the X and Y directions.

In a subsequent **step 600,** the time to collision *TTC (Time To Collision)* between the vehicle *ego* and the object previously identified as VRU is preferably calculated. It is assumed here that the vehicle ego and the object *VRU* will continue to move at the speed and possibly also the acceleration at which these variables were detected at the detection time $t_0$. This means that the collision between the vehicle ego and the object *VRU* is likely to occur at a collision time $t_{ttc}$ at which the longitudinal distance $x_{VRU}$ between the object *VRU* and the vehicle ego, i.e. the distance in the X direction in relation to the vehicle coordinate system X, Y, has been reduced to zero because, for example, the zero point 6 of the vehicle coordinate system X, Y is located on the longitudinal center line or center axis B of the vehicle ego and in the middle of the front of the vehicle. The estimated or predicted time to collision *TTC (Time To Collision),* which elapses from the detection time $t_0$ until the collision, can then be calculated on the basis of the longitudinal distance $x_{VRU}$, the relative longitudinal velocity $v_{x,VRU}$ and the relative longitudinal acceleration $a_{x,VRU}$ of the object *VRU* in relation to the vehicle ego as follows:

$$TTC = \frac{-v_{x,VRU} - \sqrt{v_{x,VRU}{}^2 - 2\, a_{x,VRU}\, x_{VRU}}}{a_{x,VRU}} \qquad (1)$$

The estimated collision time $t_{ttc}$ of the collision can then be calculated on the basis of this time to collision *TTC* and the detection time $t_0$ of the object *VRU* as follows:

$$t_{ttc} = t_0 + TTC \qquad (2)$$

The following input variables transformed to the vehicle coordinate system X, Y are therefore used for the calculations in step 500:

- the relative distance in X and Y direction between the object *VRU* and the vehicle ego at the time of detection $t_0$ ($x_{VRU}(0)$, $y_{VRU}(0)$)

- the relative velocities in X and Y direction between the object *VRU* and the vehicle ego at the time of detection $t_0$ ($v_{x,VRU}(0)$, $v_{y,VRU}(0)$)

- the relative acceleration in the X direction between the object *VRU* and the vehicle ego at the time of detection $t_0$ ($a_{x,VRU}(0)$).

The output variables of the calculations in **step 500** are transformed to the vehicle coordinate system X, Y:

- the predicted time until collision *TTC* starting from the detection time $t_0$ of the object *VRU;*

- the predicted collision time $t_{ttc}$;

- the longitudinal distance $x_{VRU}(t_{ttc})$ in the X-direction between the object *VRU* and the vehicle ego at the predicted time of collision $t_{ttc}$ which in the present case is zero due to the position of the vehicle coordinate system X, Y at the front face of the vehicle ego.

Therefore, based on the previous calculation, only the relative longitudinal position $x_{VRU}$ of the object *VRU* at the predicted collision time $t_{ttc}$ is known, here in particular $x_{VRU}(t_{ttc}) = 0$.

To assess whether the collision will actually occur or not, the lateral position of the object *VRU* in relation to the vehicle coordinate system $y_{VRU}$ of the object *VRU* in relation to the vehicle coordinate system X, Y in the Y-direction at the predicted collision time $t_{ttc}$ must also be known. This lateral position $y_{VRU}$ of the object *VRU* in respect to the vehicle ego at the predicted collision time $t_{ttc}$ is determined in a subsequent **step 600** on the basis of the time duration until the collision *TTC* and the lateral distance $y_{VRU}$ of the object *VRU* to the vehicle ego at the time of detection $t_0$ and the lateral relative speed ($v_{y,VRU}(0) = const.$), which is assumed to be constant.

$$y_{VRU}(t_{ttc}) = y_{VRU}(0) + v_{y,VRU} \cdot TTC \qquad (3)$$

This means that in **step 600** the relative position $x_{VRU}(t_{ttc})$, $y_{VRU}(t_{ttc})$ of the object *VRU* in the vehicle coordinate system X, Y at the predicted collision time $t_{ttc}$ of the potential collision is predicted.

A simple decision criterion for a necessary braking intervention could now be to check whether the lateral position $y_{VRU}(t_{ttc})$ of the object *VRU* at the predicted collision time $t_{ttc}$ is located within the drive hose 7 of the vehicle ego. The following condition would then be checked if the vehicle width $\Delta y_{vehicle}$ extending in the Y-direction is assumed as the width of the drive tube 7:

$$|y_{VRU}(t_{ttc})| \leq \frac{\Delta y_{vehicle}}{2} \qquad (4)$$

However, such a procedure should preferably not be used here, in which a deterministic view of the behavior of the object *VRU* is used, in which it is assumed that the object *VRU* continues to move with the object parameters recorded at the detection time $t_0$ until the collision. However, this assumption can cause problems. On the one hand, measurements in reality are always subject to uncertainties and on the other hand, the time to collision *TTC* is usually 3-5 seconds. This is a relatively long prediction period in the case of pedestrians and cyclists, as they move less slowly than vehicles and their speeds and direction of movement can therefore be subject to strong and abrupt changes. For example, pedestrians can turn on their heels or stop abruptly at a crosswalk or change their direction of movement so that they no longer move perpendicular to the edge of the road (change of direction of movement by 90°).

It is therefore preferable to use a different approach for the collision check, which takes better account of the probabilistic nature of the movement of a VRU-object, but still builds on the previous prediction of the position of the VRU-object at the time collision time $t_{ttc}$ of the potential collision with the vehicle ego. It is also assumed that the VRU-object is at a certain lateral position $y_{VRU}(t_{ttc})$ at the collision time $t_{ttc}$.

For example, lateral positions here in the Y-direction to the left and right of this designated lateral position $y_{VRU}(t_{ttc})$ are also possible positions of the object VRU at the collision time $t_{ttc}$ and these positions are also assigned a probability. As a result, instead of the predicted lateral position $y_{VRU}(t_{ttc})$ at the collision time $t_{ttc}$. a (general) lateral position probability $p(y, t_{ttc})$ of the object *VRU* at the time of collision $t_{ttc}$. can be established.

Preferably, a location probability density function $p(y)$ is used to determine the location probability ($p(y, t_{ttc})$ of the object *VRU* at the time of collision $t_{ttc}$. with sufficient accuracy and plausibility. If this location probability density function $p(y)$ is now integrated between the limits of the drive hose 7 (Fig. 1: drive hose 7 limited by the lines A, B), the absolute probability $P_{drive\,hose}(t_{ttc})$ that the object *VRU* will be located at the collision time $t_{ttc}$ within the guide hose 7 is obtained.

$$P_{drive\,hose}(t_{ttc}) = \int_{-\frac{yvehicle}{2}}^{+\frac{yvehicle}{2}} p(y, t_{ttc})\, dy \qquad (5)$$

This probability $P_{drive\,hose}(t_{ttc})$ is preferably considered here as collision probability and represents an essential parameter for a subsequent assessment of whether or not intervention in a drive and/or braking system of the vehicle ego is necessary.

This collision probability is determined all the more accurately measured against the real conditions, the more accurately the location probability density function is able to map the actual behavior of the object *VRU.*

In contrast to the deterministic approach described above according to the above equation (4), it is then also possible that even a predicted position of the object VRU outside the drive hose 7 (Fig. 1: limited by lines A and C) leads to a certain collision probability.

In summary, **step 600** is therefore performed on the basis of the input variables, namely

- the lateral position $y_{VRU}(0)$ of the object *VRU* in relation to the vehicle *ego* at the detection time $t_0$, and

- the relative speed $v_{y,VRU}(0)$ between the object VRU and the vehicle ego at the detection time $t_0$, and

- the predicted time to collision *TTC*

  as an output variable

  - the lateral position $y_{VRU}(t_{ttc})$ of the object *VRU* in relation to the vehicle ego at the potential collision time $t_{ttc}$

  is determined.

One possibility for modeling the location probability density function would be to assume a normally distributed location probability (Gaussian distribution). In this case, the expected value E would correspond to the predicted lateral position $y_{VRU}(t_{ttc})$ of the object *VRU* in relation to the vehicle ego at the potential collision time $t_{ttc}$

$$E = y_{VRU}(t_{ttc}) \qquad (6)$$

The standard deviation of the Gaussian function is obtained by calculating the covariance matrix based on the measurement uncertainties. Although this is a feasible approach, the Gaussian function also has disadvantages in the present case: if the measurement uncertainties are high, the standard deviation of the Gaussian function also increases and the curve of the probability of presence density function becomes "broad and flat". As a result, the absolute probability that the object *VRU* will remain within the drive tube 7 decreases and the probability that it will even move away from the vehicle ego increases (change in direction of movement by 180°). Although this is mathematically correct, it does not adequately reflect reality. In fact, such a 180° change in the direction of movement during motion is virtually impossible, especially at higher object speeds, as is the case with fast pedestrians or cyclists, for example. Therefore, the aim is to use and model a probability density function that takes this problem into account.

The Rayleigh-distribution or Rayleigh-function $p_{Rayleigh}$ has proven to be suitable for the present purpose, namely the determination of the collision probability of a vehicle with VRU's as objects, for which the following applies at the predicted collision time $t_{ttc}$:

$$p_{Rayleigh}(y^*, t_{ttc}) = \begin{cases} \frac{y}{\sigma^2} \, e^{-\frac{y^{*2}}{2\sigma^2}}, y \geq 0 \\ 0, \ y < 0 \end{cases} \qquad (7)$$

In contrast to the Gaussian function, the Rayleigh distribution $p_{Rayleigh}$ is only defined for positive function values, here only for positive lateral distances $y \geq 0$ whereas negative function values, in this case negative lateral distances $y < 0$ are generally assigned a probability density equal to zero. In order to be able to model the location probability of the object *VRU,* adjustments to the described problem and further calculations are necessary.

The expected value E of the Rayleigh distribution $p_{Rayleigh}$ should be the same as for the Gaussian distribution of the predicted position $y_{VRU}(t_{ttc})$ of the object *VRU* at the time of collision $t_{ttc}$ in relation to the vehicle ego in the Y-direction of the vehicle coordinate system X, Y:

$$E = y_{VRU}(t_{ttc}) \qquad (8)$$

This also corresponds to the high point of the Rayleigh-function or -distribution $p_{Rayleigh}$ and therefore the function value with the highest probability of occurrence.

The parameter $\sigma$ is calculated from the expected value *E* according to the general law of the Rayleigh-distribution as follows:

$$\sigma = E\sqrt{\frac{2}{\pi}} = y_{VRU}(t_{ttc})\sqrt{\frac{2}{\pi}} \qquad (9)$$

The zero point of the Rayleigh-function $p_{Rayleigh}$ is now shifted linearly to the point at which the object *VRU* is located at the time of detection $t_0=0$, i.e:

$$y^* = y_{VRU} - y_{VRU}(0) \qquad (10)$$

This fulfills the condition that applies at the position of the object *VRU* at the detection time $t_0$:

$$p_{Rayleigh}(y_{VRU}(0), t_{ttc}) = 0 \qquad (11)$$

It follows from this:

$$p_{Rayleigh}(y_{VRU} - y_{VRU}(0), t_{ttc}) =$$

$$\begin{cases} \dfrac{|y-y(0)|}{y_{VRU}(t_{ttc})\sqrt{\frac{2}{\pi}}^2} \, e^{-\dfrac{(y-y(0))^2}{2\, y_{VRU}(t_{ttc})\sqrt{\frac{2}{\pi}}^2}}, & (y_{VRU} - y_{VRU}(0))\dfrac{v_{y,VRU}(0)}{|v_{y,VRU}(0)|} \le 0 \\ 0, & (y_{VRU} - y_{VRU}(0))\dfrac{v_{y,VRU}(0)}{|v_{y,VRU}(0)|} > 0 \end{cases} \qquad (12)$$

The condition:

$$(y_{VRU} - y_{VRU}(0))\dfrac{v_{y,VRU}(0)}{|v_{y,VRU}(0)|} \qquad (13)$$

is used to mathematically distinguish whether the considered lateral position $y_{VRU}$ of the object *VRU* in relation to the vehicle ego lies within the defined range of the Rayleigh-distribution $p_{Rayleigh}$ depending on the relative lateral direction of movement between the object *VRU* and the vehicle ego, i.e. positive and negative speed must be distinguished in the modeling, i.e. a total of four case distinctions are made: The object *VRU* approaches the vehicle ego from the right or left, or the object *VRU* moves to the left or to the right.

Further calculations are not necessary here, preferably for modeling the Rayleigh-function $p_{Rayleigh}$ in **step 700 is** not necessary.

The advantage of the Rayleigh-function $p_{Rayleigh}$ lies in the fact that a stay of the object *VRU* at the potential collision time $t_{ttc}$ against the detected direction of movement of the object *VRU* is excluded ($p_{Rayleigh}(y^* \le 0, t_{ttc}) = 0$) and a change in the direction of movement by 180° degrees, for example, is not considered. As a result, the probability of the object *VRU* being located within the drive hose 7 **(Fig. 1:** delimited by lines A and C) at the collision time $t_{ttc}$ increases. If, contrary to expectations, the object *VRU* nevertheless reverses its direction of movement from the time of detection $t_0$, for example, this approach has a conservative interpretation, because in this case it would be wrongly warned instead of not being warned if it were necessary. The latter would be more likely to be the case if a Gaussian function were used and would therefore be more problematic from the point of view of collision safety.

In step **700,** therefore, on the basis of the input variables

- lateral position $y_{VRU}(t_{ttc})$ of the object *VRU* in relation to the vehicle ego at the predicted collision time $t_{ttc}$, and

- lateral position $y_{VRU}(0)$ of the object *VRU* in relation to the vehicle ego at the detection time $t_0$; and

- lateral relative speed $v_{y,VRU}(0)$ between the object *VRU* and the vehicle ego at the detection time $t_0$; and

- drive hose width, which in particular corresponds to the vehicle width $\Delta y_{vehicle}$

as an output variable

- the location probability density $p_{Rayleigh}(Y_{VRU}, t_{ttc})$ of the object *VRU* at the potential collision time $t_{ttc}$ is determined according to a Rayleigh-distribution.

In a subsequent **step 800,** the collision probability of the vehicle ego with the object *VRU* is determined.

The above-described (numerical) integration of the location probability density function (Rayleigh-distribution) preferably between the limits of the drive tube 7 **(Fig. 1:** lines A and C, which limit the vehicle width $\Delta y_{vehicle}$) here preferably directly forms the collision probability $p$, i.e. the probability $p$ of the vehicle ego colliding with the object VRU.

The input variables of this **step 800** are

- the location probability density $p_{Rayleigh}(y_{VRU}, t_{ttc})$ of the object $VRU$ at the potential or predicted collision time $t_{ttc}$ according to the Rayleigh-distribution, and

- the width of the drive hose 7, here for example the vehicle width $\Delta y_{vehicle}$.

To increase safety, the width of the drive hose 7 can also be greater than the width $\Delta y_{vehicle}$ of the vehicle.
The output variable of **step 800** is then

- the location probability $P_{Kollision,Rayleigh}(t_{ttc})$ of the object VRU being located in the drive hose 7 of the vehicle ego at the potential or predicted collision time $t_{ttc}$ according to the Rayleigh-distribution, wherein said location probability $P_{Kollision,Rayleigh}(t_{ttc})$ preferably corresponds to the collision probability $p$.

In a subsequent **step 900,** a query is made as to whether the previously determined collision probability $P_{Kollision,Rayleigh}(t_{ttc})$ exceeds a parameterizable threshold value $P_{min}$:

$$P_{Kollision,Rayleigh}(t_{ttc}) > P_{min} ? \qquad (14)$$

If this is the case (Yes), then in **step 1000** an intervention is made in a drive and/or in a braking device of the vehicle ego in order to brake the vehicle ego in anticipation to avoid the collision. If not (No), the procedure is looped back to START.
The input variable of **step 900** are therefore

- the location probability $P_{Kollision,Rayleigh}(t_{ttc})$ of the object $VRU$ in the drive hose 7 at the potential collision time $t_{ttc}$ according to the Rayleigh-distribution (= collision probability p), and

- the parameterizable threshold value $P_{min}$ for the location probability $p$,

and the output variable

- a physical signal, which is preferably transmitted via a vehicle CAN, for example, which then triggers the intervention in the drive and/or the braking device.

Once step **1000 has** been completed, the process of the method is finished.

<u>List of reference signs</u>

| | |
|---|---|
| 1 | vehicle trajectory |
| 2 | object trajectory between points D-D |
| 3 | first sensor |
| 4 | detection range |
| 5 | evaluation device |
| 6 | zero point |
| 7 | drive hose |
| 8 | roadway |
| 9 | second sensor |

| | |
|---|---|
| 100-1000 | process steps |
| ego | vehicle |
| VRU | Vulnerable Road User |
| X, Y | vehicle fixed coordinate system |
| X | X-direction of the coordinate system |
| Y | Y-direction of the coordinate system |
| $t_0$ | detection time |
| $t_{ttc}$ | collision time |
| $y_{VRU}(t_{ttc})$ | lateral position of the object at the collision time |
| TTC (Time To Collision) | estimated time to collision |
| $P_{Kollision,Rayleigh}(t_{ttc})$ | location probability of the object at the time of collision $t_{ttc}$ |
| $\Delta x, \Delta y, \sigma\Delta x, \sigma\Delta y$ | relative distances between the vehicle and the object and their variances $\sigma$ in the X- and Y-directions |
| $\Delta v_x, \Delta v_y, \sigma\Delta v_x, \sigma\Delta v_y$ | relative speeds between the vehicle and the object and their variances $\sigma$ in the X- and Y-directions |
| $\Delta a_x, \Delta a_y, \sigma\Delta a_x, \sigma\Delta a_y$ | relative accelerations between the vehicle and the object and their variances $\sigma$ in the X- and Y- directions |
| $x_{VRU}, y_{VRU}$ | relative position of the object in relation to the vehicle in X-and Y- direction |
| $v_{x,VRU}, v_{y,VRU}$ | relative speed of the object in relation to the vehicle in the X-and Y- directions |
| $a_{x,VRU}, a_{y,VRU}$ | relative acceleration of the object in relation to the vehicle in the X- and Y- directions |
| $p_{Rayleigh}(y_{VRU}, t_{ttc})$ | location probability density function of the object at the collision time $t_{ttc}$ according to Rayleigh-distribution |
| $P_{drive hose}(t_{ttc})$ | probability, that the object VRU will be located at the collision time $t_{ttc}$ within the guide hose |
| $p$ | probability of collision |
| $p_{min}$ | parameterizable threshold value for the probability of collision |
| $E$ | expected value of the Rayleigh-distribution |
| $\Delta y_{vehicle}$ | vehicle width |
| A | drive hose limitation |
| B | longitudinal center line |
| C | drive hose limitation |

**Claims**

1. Method for determining a collision probability of a vehicle (ego) with an object (VRU), in particular with a moving object (VRU), in which

    a) it is checked whether an object (VRU) is located within a detection range (4) of a sensor system (3) of the vehicle (ego), and if this is detected at a detection time ($t_0$) then
    b) at the detection time ($t_0$)

        b1) vehicle parameters characterizing a position and/or a movement of the vehicle (ego) are detected, and
        b2) object parameters characterizing a position and/or a movement and/or an object class of the object (VRU) including a lateral position (dy ($t_0$)) of the object (VRU) relative to the vehicle (ego) are detected,

    c) a collision check is carried out at least on the basis of the detected vehicle parameters and the detected object parameters to determine whether a collision of the vehicle (ego) with the object (VRU) is to be expected, and
    d) if it is determined during the collision check that a collision is to be expected, then

        d1) an expected collision time ($t_{ttc}$) of the collision and/or an expected time to collision (TTC) is determined, which extends from the detection time ($t_0$) to the expected collision time ($t_{ttc}$), and
        d2) a lateral position (dy ($t_{ttC}$)) of the object (VRU) relative to the vehicle (ego) which will be present at the expected collision time ($t_{ttC}$) or after the expected time to collision (TTC) has elapsed is predicted, and

    e) on the basis of

        e1) of the detected lateral position (dy ($t_0$)) of the object (VRU) at the detection time ($t_0$), and
        e2) the expected collision time ($t_{ttc}$) of the collision and/or the expected time to collision (TTC), and
        e3) the predicted lateral position (dy ($_{ttC}$)) of the object (VRU) which will be present at the expected collision time ($t_{ttc}$) or after the expected time to collision (TTC) has elapsed a location probability ($P_{Kollision,Rayleigh}(t_{ttc})$) is determined for, that the lateral position (dy ($t_{ttC}$)) of the object (VRU) relative to the vehicle (ego) predicted at the expected collision time ($t_{ttC}$) or after the predicted time to collision (TTC) has elapsed, is located within a drive tube (7) of the vehicle (ego), wherein

    f) when determining the location probability ($P_{Kollision,Rayleigh}(t_{ttc})$)

        f1) a location probability density function ($p_{Rayleigh}(y_{VRU}, t_{ttc})$) is used, which is represented by or includes a Rayleigh-function ($_{pRayleigh}$), and
        f2) the location probability density function ($p_{Rayleigh}(y_{VRU}, t_{ttc})$) is integrated between the boundaries (A, C) of a driving tube (4) of the vehicle (ego), and

    g) the collision probability (p) of the vehicle (ego) with the object (VRU) is determined on the basis of the location probability ($P_{Kollision,Rayleigh}(t_{ttc})$).

2. Method according to claim 1, **characterized in that** at least some of the object parameters are detected in respect to a vehicle coordinate system (X, Y) which has a zero point (6) which is particularly arranged on a longitudinal centre line (B) of the vehicle (ego), in particular in the center of a front surface of the vehicle (ego).

3. Method according to one of the preceding claims, **characterized in that** the Rayleigh-function ($_{pRayleigh}$) is modelled on the basis of at least the following specifications:

    a) the predicted lateral position (dy ($t_{ttC}$)) of the object (VRU) relative to the vehicle (ego) at the expected collision time ($t_{ttc}$) is used as the expected value (E) of the Rayleigh-function ($_{pRayleigh}$), and
    b) the point at which the object (VRU) is detected at the detection time ($t_0$) relative to the vehicle (ego) is used as the zero point of the Rayleigh- function ($_{pRayleigh}$), and
    c) a reversal of the direction of movement of the object (VRU) is excluded, in particular a reversal of the direction of movement by 180 degrees.

4. Method according to one of the preceding claims, **characterized in that** the expected collision time ($t_{ttc}$) is determined on the basis of the detection time ($t_0$) and the expected time to collision ($t_{TTC}$).

5. Method according to one of the preceding claims, **characterized in that** the detecting of object parameters of the object comprise a detecting of an object class of the object (VRU), where at least the following object classes being used:

   a) pedestrians,
   b) cyclists,
   c) motor vehicles.

6. Method according to claim 5, **characterized in that** the collision check is only carried out if the object (VRU) has been detected or classified as a pedestrian or as a cyclist.

7. Method according to one of the preceding claims, **characterized in that**

   a) a vehicle trajectory (1) of the vehicle (ego) is determined from the detected vehicle parameters, and **in that**
   b) an object trajectory (2) of the detected object (VRU) in relation to the vehicle (ego) is determined from the detected object parameters.

8. Method according to claim 7, **characterized in that** the collision check is only carried out if it is determined that the object trajectory (2) intersects with the vehicle trajectory (1).

9. Method according to one of the preceding claims, **characterized in that** at least some of the following parameters are detected or determined as vehicle parameters and as object parameters: The relative longitudinal position (dx) of the object (VRU) in respect to the vehicle (ego), the relative lateral position (dy) of the object (VRU) in respect to the vehicle (ego), the relative longitudinal velocity ($dv_x$) between the vehicle (ego) and the object (VRU), the relative lateral velocity ($dv_y$) between the vehicle (ego) and the object (VRU), the velocity of the vehicle in longitudinal direction ($v_x$), the velocity of the vehicle in lateral direction ($v_y$), the direction of movement of the object (VRU) relative to the vehicle (ego).

10. Method according to one of the preceding claims, **characterized in that**, depending on the determined collision probability (p) of the vehicle (ego) with the object (VRU), an intervention in a drive and/or a braking device of the vehicle (ego) takes place.

11. Method according to claim 10, **characterized in that** it is checked whether the determined collision probability (p) exceeds a parameterizable threshold value ($P_{min}$) and if this is the case, a physical signal is generated which triggers the intervention in the drive and/or the braking device of the vehicle in order to brake the vehicle.

12. Device for carrying out the method according to one of the preceding claims, **characterized in that** at least the following is provided

   a) a sensor system (3, 9) is provided which detects the vehicle parameters and the object parameters, and
   b) an evaluation device (5), which carries out the collision check and the determination of the collision probability (p) of the vehicle (ego) with the object (VRU).

FIG.1

FIG.2

Europäisches
Patentamt

European
Patent Office

Office européen
des brevets

# EUROPEAN SEARCH REPORT

**Application Number**

EP 25 15 2987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/388505 A1 (SHARMA BANJADE VESH RAJ [US] ET AL) 8 December 2022 (2022-12-08) <br> * figure 5 * <br> * paragraph [0029] * <br> * paragraph [0039] * <br> * paragraph [0043] * <br> * paragraph [0087] - paragraph [0089] * <br> * paragraph [0120] * <br> * paragraph [0266] * <br> * paragraph [0271] - paragraph [0277] * <br> * paragraph [0302] * <br> * paragraph [0317] * <br> * paragraph [0339] * <br> * paragraph [0440] * <br> * paragraph [0465] * <br> * paragraph [0469] * <br> ----- | 1-12 | INV. <br> G08G1/00 <br> G08G1/16 <br> B60W30/095 <br> B60W60/00 <br> G08G1/01 |
| A | KOOIJ JULIAN F ET AL: "Context-Based Path Prediction for Targets with Switching Dynamics", <br> ARXIV.ORG, CORNELL UNIVERSITY LIBRARY, 201 OLIN LIBRARY CORNELL UNIVERSITY ITHACA, NY 14853, <br> vol. 127, no. 3, 2 July 2018 (2018-07-02), pages 239-262, XP036710040, <br> DOI: 10.1007/S11263-018-1104-4 <br> [retrieved on 2018-07-02] <br> * figures 10, 15 * <br> * Section 6.2.1; <br> page 257, left-hand column * <br> ----- <br> -/-- | 1-12 | TECHNICAL FIELDS SEARCHED (IPC) <br><br> G08G <br> B60W <br> B60R <br> G01S |

The present search report has been drawn up for all claims

| Place of search | Date of completion of the search | Examiner |
|---|---|---|
| The Hague | 18 June 2025 | Fernández Santiago |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 2987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZERNETSCH STEFAN ET AL: "A Holistic View on Probabilistic Trajectory Forecasting - Case Study. Cyclist Intention Detection", 2022 IEEE INTELLIGENT VEHICLES SYMPOSIUM (IV), IEEE, 4 June 2022 (2022-06-04), pages 265-272, XP034152004, DOI: 10.1109/IV51971.2022.9827220 [retrieved on 2022-07-19] * figure 1 * * Section B; page 268, left-hand column * | 1-12 | |
| A | RICHARD ALTENDORFER ET AL: "A New Approach To Estimate The Collision Probability For Automotive Applications", ARXIV.ORG, CORNELL UNIVERSITY LIBRARY, 201 OLIN LIBRARY CORNELL UNIVERSITY ITHACA, NY 14853, 3 February 2021 (2021-02-03), XP091143651, DOI: 10.1016/J.AUTOMATICA.2021.109497 * Section II. Collision probability from 2d spatial overlap * | 1-12 | TECHNICAL FIELDS SEARCHED (IPC) |
| A | US 2018/233048 A1 (ANDERSSON JONNY [SE] ET AL) 16 August 2018 (2018-08-16) * paragraph [0061] * | 1-12 | |

The present search report has been drawn up for all claims

| Place of search | Date of completion of the search | Examiner |
|---|---|---|
| The Hague | 18 June 2025 | Fernández Santiago |

EPO FORM 1503 03.82 (P04C01)

## ANNEX TO THE EUROPEAN SEARCH REPORT
## ON EUROPEAN PATENT APPLICATION NO.

EP 25 15 2987

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | | Publication date |
|---|---|---|---|---|
| US 2022388505 A1 | 08-12-2022 | CN | 114730527 A | 08-07-2022 |
| | | EP | 4073780 A1 | 19-10-2022 |
| | | US | 2022388505 A1 | 08-12-2022 |
| | | WO | 2021118675 A1 | 17-06-2021 |
| US 2018233048 A1 | 16-08-2018 | BR | 112018001990 A2 | 18-09-2018 |
| | | EP | 3338266 A1 | 27-06-2018 |
| | | KR | 20180039700 A | 18-04-2018 |
| | | SE | 1551086 A1 | 21-02-2017 |
| | | US | 2018233048 A1 | 16-08-2018 |
| | | WO | 2017030493 A1 | 23-02-2017 |

EPO FORM P0459

For more details about this annex : see Official Journal of the European Patent Office, No. 12/82